# EUROPÄISCHE PATENTSCHRIFT

(11) **EP 3 781 906 B1**
(45) Veröffentlichungstag und Bekanntmachung des Hinweises auf die Patenterteilung: **10.01.2024**
(21) Anmeldenummer: 19718277.7
(22) Anmeldetag: 08.04.2019
(51) Int. Cl.: G01C 21/32, G08G 1/16, B60W 20/12

(54) **VERFAHREN UND VORRICHTUNG ZUM BESTIMMEN EINER HOCHGENAUEN POSITION EINES FAHRZEUGS**
METHOD AND DEVICE FOR DETERMINING A HIGHLY PRECISE POSITION OF A VEHICLE
PROCÉDÉ ET DISPOSITIF POUR DÉTERMINER UNE POSITION TRÈS PRÉCISE D'UN VÉHICULE

(30) Priorität: 20.04.2018 DE 102018206067
(43) Veröffentlichungstag der Anmeldung: 24.02.2021
(73) Patentinhaber: Robert Bosch GmbH, 70442 Stuttgart (DE)
(72) Erfinder: STRAUSS, Tobias, 74182 Obersulm (DE); HASBERG, Carsten, 74360 Ilsfeld-Auenstein (DE); PAULS, Jan-Hendrik, 71723 Großbottwar (DE); RASP, Philipp, 72827 Wannweil (DE)
(86) Internationale Anmeldenummer: PCT/EP2019/058841
(87) Internationale Veröffentlichungsnummer: WO 2019/201650

(56) Entgegenhaltungen:
- EP-A1- 2 012 211
- EP-A1- 3 130 891
- WO-A1-2011/023246
- WO-A1-2017/202570
- DE-A1-102016 214 028
- US-A1- 2018 024 562
- US-B2- 9 644 975

## Beschreibung

Die vorliegende Erfindung betrifft ein Verfahren sowie eine Vorrichtung zum Bestimmen einer hochgenauen Position eines Fahrzeugs mit einem Schritt des Erfassens von Umgebungsdatenwerten, einem Schritt des Ausführens eines Abgleichs der Umgebungsdatenwerte mit einer Karte, einem Schritt des Bestimmens der hochgenauen Position des Fahrzeugs, abhängig von dem Abgleich, und einem Schritt des Bereitstellens eines Signals, ausgehend von der hochgenauen Position.

### Stand der Technik

Die US 9 644 975 B2 offenbart ein Verfahren und ein System zum Bestimmen einer Position eines Fahrzeugs.

Die US 2018/024562 A1 offenbart ein System und ein Verfahren zum Lokalisieren eines Fahrzeugs mittels Fahrspurerkennung.

Die WO 2017/202570 A1 offenbart ein Verfahren, eine Vorrichtung und ein computerlesbares Speichermedium mit Instruktionen zur Bestimmung der lateralen Position eines Fahrzeuges relativ zu den Fahrstreifen einer Fahrbahn

### Offenbarung der Erfindung

Das erfindungsgemäße Verfahren zum Bestimmen einer hochgenauen Position eines Fahrzeugs umfasst einen Schritt des Erfassens von Umgebungsdatenwerten, welche eine Umgebung des Fahrzeugs repräsentieren, wobei die Umgebung mehrere Umgebungsmerkmale, welche wenigstens eine regelmäßige Struktur aufweisen, umfasst und die Umgebungsdatenwerte wenigstens die wenigstens eine regelmäßige Struktur umfassen. Das Verfahren umfasst weiterhin einen Schritt des Ausführens eines Abgleichs der Umgebungsdatenwerte mit einer Karte, einen Schritt des Bestimmens der hochgenauen Position des Fahrzeugs, abhängig von dem Abgleich, und einen Schritt des Bereitstellens eines Signals, ausgehend von der hochgenauen Position.

Unter einem Fahrzeug ist beispielsweise ein Straßenfahrzeug und/oder eine Drohne und/oder ein Flugzeug und/oder ein Zug zu verstehen. Unter einem Straßenfahrzeug ist insbesondere ein automatisiertes Fahrzeug zu verstehen. Unter einem automatisierten Fahrzeug ist ein teil-, hoch- oder vollautomatisiertes Fahrzeug zu verstehen.

Vorzugsweise erfolgt das Bereitstellen des Signals derart, dass das Fahrzeug ausgehend von der hochgenauen Position betrieben wird und/oder erfolgt das Bereitstellen des Signals derart erfolgt, dass die Karte abhängig von dem Signal aktualisiert wird.

Unter einem Betreiben des Fahrzeugs ist zu verstehen, dass das Fahrzeug beispielsweise teil-, hoch- oder vollautomatisiert betrieben wird. Dabei umfasst das Betreiben beispielsweise das Bestimmen einer Trajektorie für das Fahrzeug und/oder das

Abfahren der Trajektorie mittels einer automatisierten Quer- und/oder Längssteuerung und/oder das Ausführen sicherheitsrelevanter Fahrfunktionen. Weiterhin umfasst das Betreiben beispielsweise das Anzeigen eines Spurwechselhinweises und/oder das Ausführen einer Lichtsteuerungsfunktion und/oder das Ausführen wenigstens einer Navigationsaufgabe. Unter einem Bereitstellen des Signals ist beispielsweise zu verstehen, dass das Signal derart mittels einer (Daten-) Schnittstelle bereitgestellt bzw. übertragen wird, dass das Signal beispielsweise von wenigstens einem Steuergerät des Fahrzeugs zum Betreiben empfangen wird.

Unter einer hochgenauen Position ist eine Position zu verstehen, welche innerhalb eines vorgegebenen Koordinatensystems, beispielsweise GNSS-Koordinaten, derart genau ist, dass diese Position eine maximal zulässige Unschärfe nicht überschreitet. Dabei kann die maximale Unschärfe beispielsweise von der Umgebung des Fahrzeugs abhängen. Weiterhin kann die maximale Unschärfe beispielsweise davon abhängen, ob das Fahrzeug teil-, hoch- oder vollautomatisiert betrieben wird. Grundsätzlich ist die maximale Unschärfe so gering, dass ein sicheres Betreiben des Fahrzeugs gewährleistet ist. Für ein vollautomatisiertes Betreiben des Fahrzeugs liegt die maximale Unschärfe beispielsweise in einer Größenordnung von etwa 10 Zentimeter.

Unter einer Karte ist beispielsweise eine digitale Karte zu verstehen, welche dazu ausgebildet ist, beispielsweise in Verbindung mit einem Navigationssystem und/oder einem Steuergerät des Fahrzeugs und/oder in Verbindung mit einem Smartphone, welches mit dem Fahrzeug verbunden bzw. von diesem umfasst wird, eine hochgenaue Position des Fahrzeugs zu bestimmen und/oder eine Funktion, abhängig von der hochgenauen Position, auszuführen, etc. In einer Ausführungsform sind unter einer Karte eine Datenwerte zu verstehen, welche insbesondere regelmäßige Strukturen in Verbindung mit deren Positionen und/oder Positionsverläufen (beispielsweise in Form von Vektoren) repräsentieren.

Unter einer Umgebung des Fahrzeugs ist beispielsweise ein Bereich zu verstehen, welcher mittels einer Umfeldsensorik des Fahrzeugs erfasst werden kann.

Unter einer Umfeldsensorik sind beispielsweise wenigstens ein Video- und/oder wenigstens ein Radar- und/oder wenigstens ein Lidar- und/oder wenigstens ein Ultraschall- und/oder wenigstens ein weiterer Sensor zu verstehen, welcher dazu ausgebildet ist, die Umgebung des Fahrzeugs in Form von Umgebungsdatenwerten zu erfassen.

Das erfindungsgemäße Verfahren löst auf vorteilhafte Weise das Problem, dass ein sicheres und zuverlässiges Betreiben eines Fahrzeugs, insbesondere bei einem automatisierten Fahrzeug, in vielen Fällen von der Kenntnis einer hochgenauen Position des Fahrzeugs abhängt. Dabei ist es bekannt eine (hochgenaue) Position abhängig von einem Umgebungsmerkmal zu bestimmen. Allerdings muss dazu ein einzelnes Umgebungsmerkmal auch als solches eindeutig erfasst, erkannt und schließlich eindeutig einer Position, beispielsweise mittels einer Karte, zugeordnet werden. Dabei führen aber gerade Umgebungsmerkmale die einander ähnlich sind bzw. die sich regelmäßig wiederholen ggf. zu einer Ungenauigkeit der Positionsbestimmung, die ein sicheres Betreiben unmöglich machen. Das hier beschriebene Verfahren unterstützt das Bestimmen der hochgenauen Position indem gerade das Vorhandensein regelmäßiger Strukturen vorteilhaft zum Bestimmen einer hochgenauen Position verwendet wird. Unter den mehreren Umgebungsmerkmalen sind beispielsweise Fahrbahnmarkierungen und/oder Verkehrszeichen und/oder Bestandteile der Infrastruktur, wie beispielsweise Schutzplankenhaltepfosten, etc., zu verstehen, wobei unter der wenigstens einen regelmäßigen Struktur - abhängig von der jeweiligen Ausgestaltung der mehreren Umgebungsmerkmale - ein räumlicher Abstand zwischen diesen mehreren Umgebungsmerkmalen zu verstehen ist. In einer weiteren Ausführungsform ist unter der wenigstens einen regelmäßigen Struktur ein zeitlicher Abstand - beispielsweise abhängig von der Geschwindigkeit des Fahrzeugs - zwischen den Erfassungszeitpunkten zu verstehen, an denen die mehreren Umgebungsmerkmale mittels der Umfeldsensorik erfasst werden. In einer weiteren Ausführungsform kann eine räumlich regelmäßige Struktur auch als zeitlicher Abstand - beispielsweise abhängig von der Geschwindigkeit des Fahrzeugs - zwischen den Erfassungszeitpunkten zu verstehen sein, an denen die mehreren Umgebungsmerkmale mittels der Umfeldsensorik erfasst werden.

Vorzugsweise stellt die wenigstens eine regelmäßige Struktur ein periodisches Auftreten der mehreren Umgebungsmerkmale entlang einer Referenzstruktur dar. Insbesondere entspricht die Referenzstruktur einer Fahrbahnmarkierung.

Unter einer Referenzstruktur ist beispielsweise eine sogenannte Referenzlinie zu verstehen, wobei die mehreren Umgebungsmerkmale auf dieser Referenzlinie aufgetragen werden. Grundsätzlich sind auch mehrdimensionale Referenzstrukturen möglich. In einer möglichen Ausführungsform muss die Referenzlinie nicht explizit definiert werden, wie beispielsweise im Falle einer Fahrbahnmarkierung (bspw. Fahrbahnbegrenzungsmarkierungen, etc.). Beispielsweise eignet sich als Referenzlinie auch eine Trajektorie des Fahrzeugs, auf die die mehreren Umgebungsmerkmale projiziert werden.

Hierin zeigt sich der Vorteil, dass regelmäßige Strukturen schnell und effizient dargestellt und somit zum Bestimmen der hochgenauen Position des Fahrzeugs ausgewertet bzw. verwendet werden können.

Erfindungsgemäß weisen die mehreren Umgebungsmerkmale wenigstens zwei voneinander unabhängige, regelmäßige Strukturen auf und im Schritt des Ausführens des Abgleichs wird eine Relation der wenigstens zwei voneinander unabhängigen, regelmäßigen Strukturen bestimmt, wobei der Abgleich abhängig von der Relation erfolgt. In einer Ausführungsform stellt eine der wenigstens zwei voneinander unabhängigen, regelmäßigen Strukturen die Referenzlinie dar, wobei beispielsweise der Abstand der wenigstens einen anderen Struktur zu dieser Referenzlinie als Abgleich verwendet wird.

Unter einer Relation der wenigstens zwei voneinander unabhängigen, regelmäßigen Strukturen ist beispielsweise eine konstante und/oder - beispielsweise abhängig von der Umgebung auftretende - (sich ändernde) Phasenverschiebung und/oder laterale bzw. longitudinale Abstände zueinander zu verstehen.

Hierin zeigt sich der Vorteil, dass ein weiteres Merkmal zum Bestimmen der hochgenauen Position vorhanden ist, welche das Verfahren insgesamt noch zuverlässiger und somit sicherer für das Fahrzeug macht.

Vorzugsweise ist zusätzlich ein Schritt des Bestimmens einer Grobposition des Fahrzeugs und/oder ein Schritt des Klassifizierens der Umgebung des Fahrzeugs, abhängig von der Grobposition, vorgesehen, und das Erfassen der Umgebungsdatenwerte erfolgt abhängig von der Klassifizierung der Umgebung.

Unter einer Grobposition ist eine Position, beispielsweise in GPS-Koordinaten, zu verstehen, die wenigstens so ungenau ist, dass ein Fahrzeug nicht abhängig von dieser Grobposition betrieben werden kann. Eine Grobposition ist beispielsweise eine Position wie sie von einem Navigationssystem bestimmt und/oder angezeigt wird. Eine Grobposition eines Fahrzeugs erlaubt beispielsweise eine Lokalisierung bezogen auf einen Straßenabschnitt, allerdings ist bereits die Bestimmung einer Fahrspur, beispielsweise bei einer mehrspurigen Fahrbahn, nahezu ausgeschlossen. Eine Grobposition wird - typischerweise - mit einer Ungenauigkeit von einigen Metern bestimmt, wobei die Ungenauigkeit unter anderem von der Umgebung des Fahrzeugs abhängt.

Unter einem Klassifizieren der Umgebung des Fahrzeugs, abhängig von der Grobposition, ist beispielsweise eine Zuordnung der Umgebung in Verkehrswegklassen zu verstehen, wobei die Verkehrswegklasse beispielsweise mittels eines Navigationssystems bestimmt wird. Eine Verkehrswegklasse stellt beispielsweise eine der folgenden Klassen dar: Landstraße, innerstädtische Straße, Straße mit/ohne Mittelstreifen, Autobahn, Schnellstraße, Feldweg, Auf- bzw. Abfahrt, etc. Abhängig von der tatsächlichen Klassifizierung der Umgebung sind dabei typische Umgebungsmerkmale vorhanden, welche sich somit besonders zum Ausführen des vorliegenden Verfahrens eignen. Beispielsweise sind auf innerstädtischen Straßen keine Leitplanken zu erwarten, wobei eine Landstraße beispielsweise keine regelmäßigen Beleuchtungseinrichtungen aufweist.

Hierin zeigt sich der Vorteil, dass beispielsweise die Umfeldsensorik an die Umgebung, welche abhängig von der Grobposition des Fahrzeugs bestimmt wird, derart angepasst wird, dass die mehreren Umgebungsmerkmale schnell und zuverlässig bestimmt werden. Dies kann beispielsweise die Ausrichtung und/oder Verwendung eines bestimmten Sensortyps betreffen.

Die erfindungsgemäße Vorrichtung zum Bestimmen einer hochgenauen Position eines Fahrzeugs umfasst eine Umfeldsensorik zum Erfassen von Umgebungsdatenwerten, welche eine Umgebung des Fahrzeugs repräsentieren, wobei die Umgebung mehrere Umgebungsmerkmale, welche wenigstens eine regelmäßige Struktur aufweisen, umfasst und die Umgebungsdatenwerte wenigstens die wenigstens eine regelmäßige Struktur umfassen. Die Vorrichtung umfasst weiterhin Rechenmittel zum Ausführen eines Abgleichs der Umgebungsdatenwerte mit einer Karte, Lokalisierungsmittel zum Bestimmen der hochgenauen Position des Fahrzeugs, abhängig von dem Abgleich, und eine Schnittstelle zum Bereitstellen eines Signals, ausgehend von der hochgenauen Position.

Vorzugsweise sind weitere Mittel zum Bestimmen einer Grobposition des Fahrzeugs und/oder zusätzliche Mittel zum Klassifizieren der Umgebung des Fahrzeugs, abhängig von der Grobposition, vorgesehen.

Vorteilhafte Weiterbildungen der Erfindung sind in den Unteransprüchen angegeben und in der Beschreibung aufgeführt.

### Zeichnungen

Ausführungsbeispiele der Erfindung sind in den Zeichnungen dargestellt und werden in den nachfolgenden Beschreibungen näher erläutert. Es zeigen:
Figur 1 ein Ausführungsbeispiel der erfindungsgemäßen Vorrichtung;
Figur 2 (2a, 2b und 2c) Ausführungsbeispiele des erfindungsgemäßen Verfahrens; und
Figur 3 (3a und 3b) Ausführungsbeispiele des erfindungsgemäßen Verfahrens jeweils in Form eines Ablaufdiagramms.

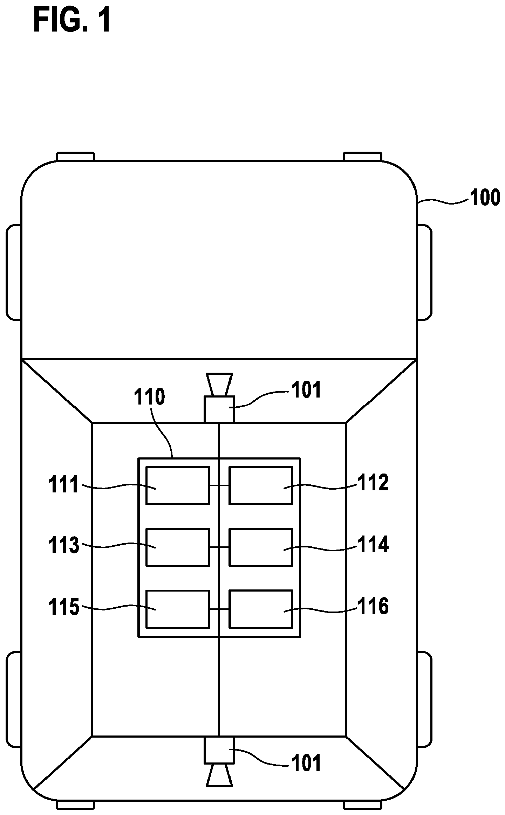

In den nachfolgenden Beschreibungen der Figuren 1, 2 und 3 werden die Begriffe Fahrzeug und automatisiertes Fahrzeug synonym verwendet und stellen keine Einschränkung dar.

### Ausführungsformen der Erfindung

Figur 1 zeigt ein Fahrzeug 100, welches die erfindungsgemäße Vorrichtung 110 zum Bestimmen 330 einer hochgenauen Position eines automatisierten Fahrzeugs 100 umfasst.

Die Vorrichtung 110 zum Bestimmen 330 einer hochgenauen Position eines automatisierten Fahrzeugs 100 umfasst eine Umfeldsensorik 111 zum Erfassen 310 von Umgebungsdatenwerten, welche eine Umgebung 200 des automatisierten Fahrzeugs 100 repräsentieren, wobei die Umgebung 200 mehrere Umgebungsmerkmale 210,220, welche wenigstens eine regelmäßige Struktur aufweisen, umfasst und die Umgebungsdatenwerte wenigstens die wenigstens eine regelmäßige Struktur umfassen. Die Vorrichtung umfasst weiterhin Rechenmittel 112 zum Ausführen 320 eines Abgleichs der Umgebungsdatenwerte mit einer digitalen Karte, Lokalisierungsmittel 113 zum Bestimmen 330 der hochgenauen Position des automatisierten Fahrzeugs 100, abhängig von dem Abgleich, und eine Schnittstelle 114 zum Bereitstellen 340 eines Signals zum Betreiben des automatisierten Fahrzeugs 100, ausgehend von der hochgenauen Position.

In einer Ausführungsform ist die Umfeldsensorik 111 beispielsweise als Recheneinheit (Prozessor, Arbeitsspeicher, Festplatte) ausgebildet, welche mit wenigstens einem bereits von dem automatisierten Fahrzeug 100 umfassten Sensor 101 verbunden ist. In einer weiteren Ausführungsform umfasst die Umfeldsensorik den wenigstens einen Sensor selbst. Die Recheneinheit umfasst beispielsweise eine Software derart, dass eine Auswertung der erfassten Umgebungsdatenwerte erfolgt. Dabei werden beispielsweise basierend auf dem Disparitätsprinzip Abstände zwischen dem automatisierten Fahrzeug 100 und wenigstens einem der mehreren Umgebungsmerkmale 210, 220 bestimmt und/oder es erfolgt ein Bestimmen der Struktur und/oder Erkennen einer regelmäßigen Struktur der mehreren Umgebungsmerkmale 210, 220.

Die Rechenmittel 112 umfassen beispielsweise einen Prozessor, Arbeitsspeicher und eine Festplatte, welche eine geeignete Software zum Ausführen 320 eines Abgleichs der Umgebungsdatenwerte mit einer digitalen Karte umfasst. Der Abgleich erfolgt beispielsweise indem die Umgebungsdatenwerte nach vorgegebenen Eigenschaften, welche beispielsweise von der konkreten Ausgestaltung der Umfeldsensorik abhängt, durchsucht und diese Eigenschaften mit der digitalen Karte, welche ortsbezogene vergleichbare Eigenschaften repräsentiert, umfasst. Diese Eigenschaften sind beispielsweise Farbwerte in Form von Graustufen und/oder Formen und/oder Farbverläufe und/oder Anordnungen von mehreren Eigenschaften zueinander.

Die Lokalisierungsmittel 113 umfassen beispielsweise eine Recheneinheit (Prozessor, Arbeitsspeicher, Festplatte) sowie eine geeignete Software, welche dazu ausgebildet ist, die hochgenaue Position des automatisierten Fahrzeugs 100, abhängig von dem Abgleich, zu bestimmen. Die hochgenaue Position wird beispielsweise bestimmt, indem eine relative Position des automatisierten Fahrzeugs 100 zu den mehreren Umgebungsmerkmalen 210, 220 bestimmt wird. Dies erfolgt beispielsweise mittels eines Richtungsvektors und/oder einem Abstand zwischen wenigstens einem der mehreren Umgebungsmerkmale und dem automatisierten Fahrzeug 100, da die ebenfalls hochgenaue Position der mehreren Umgebungsmerkmale 210, 220 in der digitalen Karte hinterlegt ist.

Die Schnittstelle 114 zum Bereitstellen eines Signals zum Betreiben des automatisierten Fahrzeugs 100, ausgehend von der hochgenauen Position, ist beispielsweise derart ausgebildet, dass die hochgenaue Position per Kabel und/oder kabellos beispielsweise an Steuergerät zum Betreiben des automatisierten Fahrzeugs 100 übertragen wird. Dazu umfasst die Schnittstelle 114 beispielsweise eine Sende- und/oder Empfangsvorrichtung zum Übertragen der Daten. In einer Ausführungsform umfasst die Schnittstelle 114 beispielsweise zusätzlich Rechenmittel um eine Anpassung und/oder Veränderung des Datenformats vorzunehmen.

In einer Ausführungsform umfasst die Vorrichtung 110 beispielsweise weitere Mittel 115 zum Bestimmen 305 einer Grobposition des automatisierten Fahrzeugs 100 und/oder zusätzliche Mittel 116 zum Klassifizieren 306 der Umgebung 200 des automatisierten Fahrzeugs 100, abhängig von der Grobposition.

Dabei sind die weiteren Mittel 115 beispielsweise als Navigationssystem ausgebildet. In einer weiteren Ausführungsform sind die weiteren Mittel 115 beispielsweise als Datenschnittstelle ausgebildet, die die Grobposition von einem Navigationssystem empfängt, welches von dem automatisierten Fahrzeug 100 umfasst wird. Dabei kann es sich beispielsweise auch um ein Smartphone handeln, welches per Kabel und/oder kabellos - beispielsweise per Bluetooth, etc. - mit dem automatisierten Fahrzeug 100 und/oder der Vorrichtung 110 verbunden ist.

Die zusätzlichen Mittel 116 sind beispielsweise als Recheneinheit (Prozessor, Arbeitsspeicher, Festplatte) ausgebildet, welche eine geeignete Software zum Klassifizieren 306 der Umgebung 200 des automatisierten Fahrzeugs 100, abhängig von der Grobposition, umfasst.

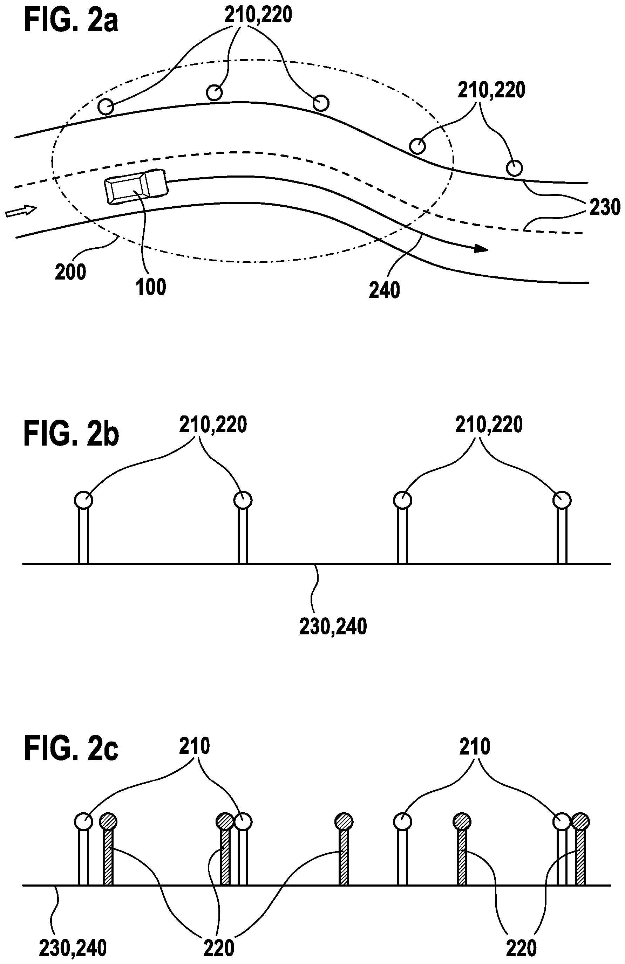

Figur 2a zeigt ein Ausführungsbeispiel des Verfahrens 300. Dabei befindet sich ein automatisiertes Fahrzeug 100 auf einem Verkehrsweg. In der Umgebung 200 des automatisierten Fahrzeugs 100, welche mittels einer Umfeldsensorik 111 erfasst wird, befinden sich mehrere Umgebungsmerkmale 210, 220, wobei die mehreren Umgebungsmerkmale 210, 220 eine regelmäßige Struktur aufweisen, hier beispielhaft als Objekte gezeigt, die in regelmäßigen Abständen entlang des Verkehrsweges angeordnet sind. Unter einem regelmäßig wiederkehrenden Abstand ist dabei beispielsweise eine Distanz zu verstehen, die beispielsweise innerhalb eines vorgegebenen Grenzwertes variieren kann, diese Grenzwerte aber nicht überschreitet. Somit stellt die wenigstens eine regelmäßige Struktur ein periodisches Auftreten der mehreren Umgebungsmerkmale 210, 220 entlang einer Referenzstruktur dar, wobei die Referenzstruktur in einer möglichen Ausführungsform einer Fahrbahnmarkierung 230 - hier beispielsweise einer Fahrbahnbegrenzungsmarkierung - und/oder einer Trajektorie 240 des automatisierten Fahrzeugs 100 entspricht.

Weiterhin können die mehreren Umgebungsmerkmale 210, 220 beispielsweise als Haltepfosten von Schutzplanken, Fahrspurmarkierungen, Leitpfosten, Schilder, Ampeln, Laternen, Betonbarrieren (Jersey barrier), Leitbaken, in der Straße eingelassene Straßenbahnschienen, Lärmschutz- und Tunnelwänden, Licht- und Reflektorleisten in Tunneln, Abflussrinnen oder Bordsteinkanten ausgebildet sein, wobei als regelmäßige Struktur beispielsweise laterale Abstände betrachtet werden. Weiterhin können die mehreren Umgebungsmerkmale 210, 220 beispielsweise als Haltepfosten von Schutzplanken, Fahrspurmarkierungen, Leitpfosten, Schilder, Ampeln, Laternen, (Fügestellen von) Betonbarrieren (Jersey barrier), Leitbaken, Fügestellen von Lärmschutz- und Tunnelwänden, Lichter bzw. Reflektoren bspw. auf Trennstreifen und/oder in Tunneln, Abfluss- und/oder Gullidecke, Pflastersteine (bspw. an Autobahnabflussrinnen) oder Bordstein-Fügestellen ausgebildet sein, wobei als regelmäßige Struktur beispielsweise longitudinale Abstände betrachtet werden. Weiterhin können die mehreren Umgebungsmerkmale 210, 220 beispielsweise als Fahrspurmarkierungen, Tunnel- und/oder Lärmschutzwandsegmenten oder Pflastersteinen und/oder Bordsteinsegmenten ausgebildet sein, wobei als regelmäßige Struktur beispielsweise Längen betrachtet werden. Weiterhin können auch Bodenwellen und/oder Unebenheiten und/oder Helligkeits- und/oder Farbverläufe von Fahrspurmarkierungen und/oder Lärmschutz- und/oder Tunnelwände und/oder Lichter und/oder Reflektoren und/oder Unterschiede in den Abrollgeräuschen (bspw. in Frequenz oder Lautstärke) und/oder Schwellen von Bahnschienen betrachtet werden.

Dabei haben Perioden und sich nur langsam (bspw. langsam über die Strecke) ändernde Strukturen den Vorteil, auch dann zuverlässig bestimmt werden zu können, wenn einzelne der mehreren Umgebungsmerkmale 210, 220 bspw. von anderen Verkehrsteilnehmern verdeckt sind. Hierbei werden im Gegensatz zu klassischen Lokalisierungsmethoden nicht mehr nur ein flächig möglichst begrenztes Umgebungsmerkmal (wie Schilder, Laternen, Häuserecken usw.) verwendet, sondern räumlich ausgedehnte Umgebungsmerkmale (wie Schutzplanken, Fahrspurmarkierungszüge), die für sich genommen weniger genau, aber deutlich robuster z.B. gegenüber partiellen Änderungen und Verdeckungen sind. Ein Bestimmen 330 der hochgenauen Position auf vergleichbarem Niveau zu alternativen Methoden ist dann dennoch durch die Kombination einzelner der mehreren Umgebungsmerkmale 210 220 möglich. Wenn sich die Struktur entlang der Referenzstruktur ändert und diese Änderung einfach beschreibbar ist, kann bspw. im Fall einer linearen Änderung die Hinterlegung von lediglich zwei der mehreren Umgebungsmerkmale 210, 220 genügen. Trotz einer extrem kompakten Speicherform kann dann durch (in diesem Fall lineare) Interpolation die hochgenaue Position des automatisierten Fahrzeugs 100 bestimmt werden.

Figur 2b zeigt eine regelmäßige Struktur, welche ein periodisches Auftreten der mehreren Umgebungsmerkmale 210, 220 entlang einer Referenzstruktur darstellt Die Referenzstruktur ist dabei als Referenzlinie gezeigt, wobei die Umgebungsmerkmale 210, 220 somit auf die Referenzlinie projiziert werden. Diese Projektion bzw. Darstellung erfolgt beispielsweise im Schritt des Ausführens 320 des Abgleichs mittels der Rechenmittel 112.

Figur 2c zeigt zwei regelmäßige Strukturen, dargestellt durch zwei voneinander unabhängige, regelmäßige Strukturen. Dabei wird im Schritt des Ausführens 320 des Abgleichs eine Relation der wenigstens zwei voneinander unabhängigen, regelmäßigen Strukturen bestimmt wird, wobei der Abgleich abhängig von der Relation erfolgt. Die Relation zueinander wird dabei beispielsweise durch eine Phasenverschiebung dargestellt, welche im Schritt des Ausführens 320 des Abgleichs mittels der Rechenmittel 112 bestimmt wird.

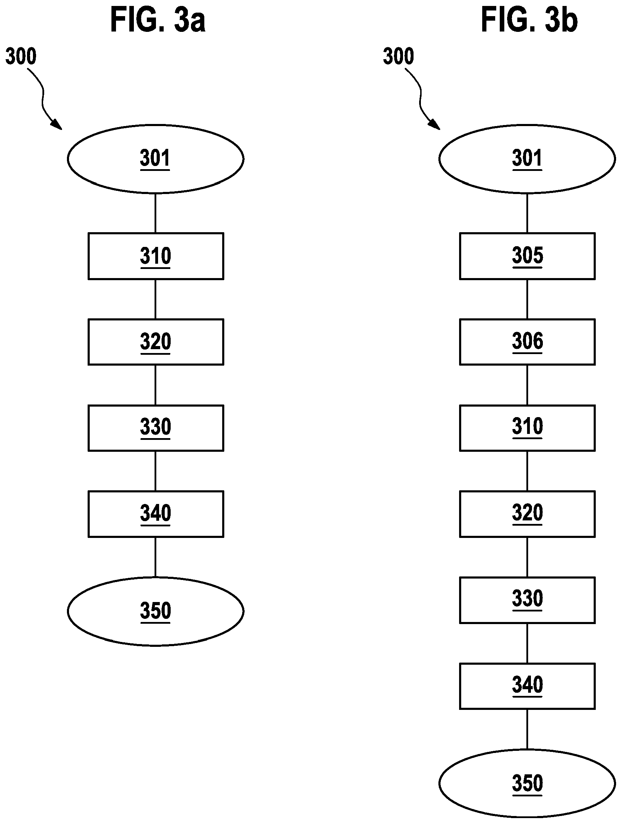

Figur 3a zeigt ein Ausführungsbeispiel eines Verfahrens 300 zum Bestimmen 330 einer hochgenauen Position eines Fahrzeugs 100.

In Schritt 301 startet das Verfahren 300.

In Schritt 310 Umgebungsdatenwerte, welche eine Umgebung 200 des Fahrzeugs 100 repräsentieren, erfasst. Dabei umfasst die Umgebung 200 mehrere Umgebungsmerkmale 210,220, welche wenigstens eine regelmäßige Struktur aufweisen, und die Umgebungsdatenwerte werden derart erfasst, dass diese wenigstens die wenigstens eine regelmäßige Struktur umfassen.

In Schritt 320 wird ein Abgleich der Umgebungsdatenwerte mit einer Karte ausgeführt.

In Schritt 330 wird die hochgenaue Position des Fahrzeugs 100, abhängig von dem Abgleich, bestimmt.

In Schritt 340 wird ein Signal, ausgehend von der hochgenauen Position, bereitgestellt.

In Schritt 350 endet das Verfahren 300.

Figur 3b zeigt ein alternatives Ausführungsbeispiel eines Verfahrens 300 zum Bestimmen 330 einer hochgenauen Position eines automatisierten Fahrzeugs 100, wobei alternativ zwei zusätzliche Schritt 305 und 306 umfasst werden. In einer weiteren - hier nicht explizit dargestellten Ausführungsform - umfasst das Verfahren 300 alternativ nur einen der beiden Schritt 305 bzw. 306.

In Schritt 301 startet das Verfahren 300.

In Schritt 305 wird eine Grobposition des automatisierten Fahrzeugs 100 bestimmt.

In Schritt 306 wird die Umgebung 200 des automatisierten Fahrzeugs 100, abhängig von der Grobposition, klassifiziert.

Anschließend folgen die Schritte 310 bis 350 gemäß der Beschreibung zu Figur 3a.

## Patentansprüche

1. Verfahren (300) zum Bestimmen (330) einer hochgenauen Position eines Fahrzeugs (100) umfassend folgende Schritte:
- Erfassen (310) von Umgebungsdatenwerten, welche eine Umgebung (200) des Fahrzeugs (100) repräsentieren, wobei die Umgebung (200) mehrere Umgebungsmerkmale (210, 220) umfasst, wobei die mehreren Umgebungsmerkmale (210,220) wenigstens zwei voneinander unabhängige, regelmäßige Strukturen aufweisen und wobei die Umgebungsdatenwerte wenigstens die zwei voneinander unabhängigen, regelmäßigen Strukturen umfassen;
- Ausführen (320) eines Abgleichs der Umgebungsdatenwerte mit einer Karte, wobei eine Relation der wenigstens zwei voneinander unabhängigen, regelmäßigen Strukturen bestimmt wird, wobei der Abgleich abhängig von der Relation erfolgt;
- Bestimmen (330) der hochgenauen Position des Fahrzeugs (100), abhängig von dem Abgleich; und
- Bereitstellen (340) eines Signals, ausgehend von der hochgenauen Position,
wobei die hochgenaue Position eine maximale Unschärfe von 10 Zentimetern aufweist.

2. Verfahren nach Anspruch 1, **dadurch gekennzeichnet, dass** das Bereitstellen (340) des Signals derart erfolgt, dass das Fahrzeug (100) ausgehend von der hochgenauen Position betrieben wird und/oder das Bereitstellen (340) des Signals derart erfolgt, dass die Karte abhängig von dem Signal aktualisiert wird.

3. Verfahren (300) nach Anspruch 1, **dadurch gekennzeichnet, dass** die wenigstens eine regelmäßige Struktur ein periodisches Auftreten der mehreren Umgebungsmerkmale (210,220) entlang einer Referenzstruktur darstellt.

4. Verfahren (300) nach Anspruch 3, **dadurch gekennzeichnet, dass** die Referenzstruktur einer Fahrbahnmarkierung (230) entspricht.

5. Verfahren (300) nach Anspruch 1, **dadurch gekennzeichnet, dass** zusätzlich ein Schritt des Bestimmens (305) einer Grobposition des Fahrzeugs (100) und uiid/udei ein Schritt des Klassifizierens (306) der Umgebung (200) des Fahrzeugs (100), abhängig von der Grobposition, vorgesehen ist, und das Erfassen (310) der Umgebungsdatenwerte abhängig von der Klassifizierung der Umgebung (200) erfolgt, wobei die Grobposition eine Ungenauigkeit von einigen Metern aufweist und wobei das Klassifizieren eine Zuordnung der Umgebung in Verkehrswegklassen umfasst.

6. Vorrichtung (110) zum Bestimmen (330) einer hochgenauen Position eines Fahrzeugs (100) umfassend folgende Mittel:
- Umfeldsensorik (111) zum Erfassen (310) von Umgebungsdatenwerten;
- Rechenmittel (112) zum Ausführen (320) eines Abgleichs der Umgebungsdatenwerte mit einer Karte;
- Lokalisierungsmittel (113) zum Bestimmen (330) der hochgenauen Position des Fahrzeugs (100), abhängig von dem Abgleich; und
- Schnittstelle (114) zum Bereitstellen (340) eines Signals, ausgehend von der hochgenauen Position,
wobei die Vorrichtung dazu ausgebildet ist, das Verfahren gemäß wenigstenes einem der Verfahrensansprüche 1 bis 5 auszuführen.

## Claims

1. Method (300) for determining (330) a highly accurate position of a vehicle (100), comprising the following steps:
- recording (310) surroundings data values that represent surroundings (200) of the vehicle (100), the surroundings (200) comprising multiple surroundings features (210, 220), wherein the multiple surroundings features (210, 220) have at least two mutually independent, regular structures and wherein the surroundings data values comprise at least the two mutually independent, regular structures;
- performing (320) a comparison of the surroundings data values against a map, wherein a relationship between the at least two mutually independent, regular structures is determined, the comparison being made on the basis of the relationship;
- determining (330) the highly accurate position of the vehicle (100) on the basis of the comparison; and
- providing (340) a signal from the highly accurate position, the highly accurate position having a maximum fuzziness of 10 centimetres.

2. Method according to Claim 1, **characterized in that** the signal is provided (340) in such a way that the vehicle (100) is operated from the highly accurate position and/or the signal is provided (340) in such a way that the map is updated on the basis of the signal.

3. Method (300) according to Claim 1, **characterized in that** the at least one regular structure represents a periodic occurrence of the multiple surroundings features (210, 220) along a reference structure.

4. Method (300) according to Claim 3, **characterized in that** the reference structure corresponds to a road marking (230).

5. Method (300) according to Claim 1, **characterized in that** there is additionally provision for a step of determining (305) a coarse position of the vehicle (100) and a step of classifying (306) the surroundings (200) of the vehicle (100) on the basis of the coarse position, and the surroundings data values are recorded (310) on the basis of the classification of the surroundings (200), wherein the coarse position has an inaccuracy of a few metres and wherein the classifying comprises assigning the surroundings to traffic route classes.

6. Apparatus (110) for determining (330) a highly accurate position of a vehicle (100), comprising the following means:
- environment sensors (111) for recording (310) surroundings data values;
- computing means (112) for performing (320) a comparison of the surroundings data values against a map;
- locating means (113) for determining (330) the highly accurate position of the vehicle (100) on the basis of the comparison; and
- an interface (114) for providing (340) a signal from the highly accurate position, the apparatus being designed to carry out the method according to at least one of Method Claims 1 to 5.

## Revendications

1. Procédé (300) pour déterminer (330) une position très précise d'un véhicule (100), comprenant les étapes suivantes :
- acquisition (310) de valeurs de données d'environnement représentant un environnement (200) du véhicule (100), l'environnement (200) comprenant une pluralité de caractéristiques d'environnement (210, 220), la pluralité de caractéristiques d'environnement (210, 220) présentant au moins deux structures régulières indépendantes l'une de l'autre et les valeurs de données d'environnement comprenant au moins les deux structures régulières indépendantes l'une de l'autre ;
- réalisation (320) d'une comparaison des valeurs de données d'environnement avec une carte, une relation desdites au moins deux structures régulières indépendantes l'une de l'autre étant déterminée, la comparaison étant réalisée en fonction de ladite relation ;
- détermination (330) de la position très précise du véhicule (100) en fonction de la comparaison ; et
- fourniture (340) d'un signal à partir de la position très précise, la position très précise présentant une imprécision maximale de 10 centimètres.

2. Procédé selon la revendication 1, **caractérisé en ce que** la fourniture (340) du signal est réalisée de telle manière que le véhicule (100) soit exploité à partir de la position très précise et/ou **en ce que** la fourniture (340) du signal est réalisée de telle manière que la carte soit mise à jour en fonction du signal.

3. Procédé (300) selon la revendication 1, **caractérisé en ce que** ladite au moins une structure régulière représente une occurrence périodique desdites multiples caractéristiques d'environnement (210, 220) le long d'une structure de référence.

4. Procédé (300) selon la revendication 3, **caractérisé en ce que** la structure de référence correspond à un marquage routier (230).

5. Procédé (300) selon la revendication 1, **caractérisé en ce qu'**il est en outre prévu une étape de détermination (305) d'une position approximative du véhicule (100) et une étape de classification (306) de l'environnement (200) du véhicule (100), en fonction de la position approximative, et **en ce que** l'acquisition (310) des valeurs de données d'environnement s'effectue en fonction de la classification de l'environnement (200), la position approximative présentant une imprécision de quelques mètres et la classification comprenant une affectation de l'environnement en classes de voies de circulation.

6. Dispositif (110) pour déterminer (330) une position très précise d'un véhicule (100), comprenant les moyens suivants :
- un système de capteurs d'environnement (111) destiné à acquérir (310) des valeurs de données d'environnement ;
- des moyens de calcul (112) destinés à réaliser (320) une comparaison des valeurs de données d'environnement avec une carte ;
- des moyens de localisation (113) destinés à déterminer (330) la position très précise du véhicule (100) en fonction de la comparaison ; et
- une interface (114) destinée à fournir (340) un signal à partir de la position très précise, le dispositif étant conçu pour mettre en œuvre le procédé selon au moins l'une des revendications de procédé 1 à 5.
